# EUROPEAN PATENT APPLICATION

(11) **EP 4 841 911 A1**
(43) Date of publication of application: **18.11.2026**
(21) Application number: 24919881.3
(22) Date of filing: 22.11.2024
(51) Int. Cl.: H04B 7/185

(54) **SATELLITE-BASED CALL METHOD, TERMINAL, AND ELECTRONIC DEVICE**

(30) Priority: 26.01.2024 CN 202410117607
(71) Applicant: ZTE CORPORATION, Shenzhen, Guangdong 518057 (CN)
(72) Inventor: HAN, Zhongzhang, Shenzhen, Guangdong 518057 (CN)
(74) Representative: Ziebig Hengelhaupt Intellectual Property Attorneys Patentanwaltskanzlei PartGmbB
(86) International application number: PCT/CN2024/133817
(87) International publication number: WO 2025/156801

(57) **Abstract**

Embodiments of the present application provide a satellite-based call method, a terminal, and an electronic device. The method comprises: acquiring an outgoing call request on the basis of a telephone management layer, the outgoing call request comprising a satellite-based call request or a conventional call request; and when it is determined that the outgoing call request is a satellite-based call request, executing a satellite-based call service on the basis of a satellite telecommunication service layer and a satellite-based call audio processing layer, wherein the satellite-based call audio processing layer is used for processing audio data from a satellite chip protocol stack and providing audio data to the satellite chip protocol stack, and the audio data is audio data corresponding to the satellite-based call service.

## Description

### CROSS REFERENCE TO RELATED APPLICATIONS

This application claims priority to Chinese Patent Application No. 2024101176071 filed on January 26, 2024, entitled "Satellite-based Call Method, Terminal, and Electronic Device", the entirety of which is incorporated herein by reference.

### TECHNICAL FIELD

The present application relates to the field of terminal technologies, and in particular, to a satellite call method, a terminal, and an electronic device.

### BACKGROUD

For satellite calling on an Android terminal and the like, a conventional hardware structure is integrated with a satellite baseband and a protocol stack chip in the hardware architecture, so as to achieve hardware-level support for satellite calling; and a satellite calling behavior is generally embedded into the native libRil (an exemplary implementation library) layer, the Radio Interface Layer (RIL), the framework layer, the telephone layer (Phone) of Android via the Hardware Abstraction Layer (HAL) in the software architecture, which cannot achieve dual standby and dual communication for satellite calling and conventional calling.

### SUMMARY

In a first aspect, embodiments of the present application provide a satellite call method performed a terminal, the method includes: acquiring, by a telephone management layer, an outgoing call request, the outgoing call request comprising a satellite call request or a conventional call request; and executing, by a satellite telecommunication service layer and a satellite call audio processing layer, a satellite call service upon the condition that the outgoing call request is determined to be a satellite call request, wherein the satellite call audio processing layer is used for processing audio data from a satellite chip protocol stack and providing audio data to the satellite chip protocol stack, and the audio data is audio data corresponding to the satellite call service.

In a second aspect, embodiments of the present application provide a terminal, including: a telephone management layer, configured to acquire an outgoing call request which includes a satellite call request or a conventional call request, and to determine whether the outgoing call request is a satellite call request; and a satellite telecommunication service layer and a satellite call audio processing layer, configured to execute a satellite call service upon the condition that the outgoing call request is determined to be a satellite call request; wherein the satellite call audio processing layer is used for processing audio data from a satellite chip protocol stack and providing audio data to the satellite chip protocol stack, and the audio data is audio data corresponding to the satellite call service.

In a third aspect, embodiments of the present application provide an electronic device, including: at least one processor, and a memory storing computer-executable instructions, wherein the executable instructions, when executed, enable the at least one processor to perform steps of the method of the first aspect.

In a fourth aspect, embodiments of the present application provide a computer-readable storage medium, the computer-readable medium stores at least one computer program, and the computer program, when executed by a processor, implements steps of the method according to the first aspect.

### BRIEF DESCRIPTION OF THE DRAWINGS

In order to more clearly illustrate the technical solutions in the embodiments of the present application or in the prior art, the drawings required for use in the description of the embodiments or the prior art will be briefly introduced below, obviously, the drawings described below are only some embodiments described in the present application, and other drawings can be obtained by those skilled in the art based on these drawings without creative labor.
FIG. 1 shows a schematic flow chart of a satellite call method provided in embodiments of the present application.
FIG. 2 shows a schematic diagram of a main software architecture of the satellite call method provided by embodiments of the present application.
FIG. 3 shows a schematic diagram of a port of a satellite chip protocol stack of the satellite call method provided by embodiments of the present application.
FIG. 4 shows a schematic diagram of a connection relationship between the satellite chip protocol stack of the satellite call method provided by embodiments of the present application and an Android system of a terminal.
FIG. 5 shows a schematic diagram of a partial software architecture of the satellite call method provided by embodiments of the present application.
FIG. 6 shows a schematic diagram of modules created by a satellite telecommunication service layer.
FIG. 7 shows a schematic flow chart of execution of the satellite call method provided in embodiments of the present application.
FIG. 8 shows a schematic flow chart of a satellite call method provided in embodiments of the present application.
FIG. 9 shows a schematic diagram of a main interaction process of the satellite call method provided in embodiments of the present application.
FIG. 10 is a schematic diagram of a hardware structure of an electronic device executing the satellite call method provided in embodiments of the present application.

### DETAILED DESCRIPTION

In order to enable those skilled in the art to better understand the technical solutions in the application, technical solutions in embodiments of the application will be described clearly and thoroughly below with reference to the accompanying drawings in embodiments of the application. Obviously, the embodiments described are part of the embodiments of the application rather than all of the embodiments. All other embodiments obtained by a person skilled in the art without creative work based on embodiments in the application should fall within the scope of the application.

Current terminals cannot achieve dual standby and dual communication for satellite calling and conventional calling, for example, while a user uses one card for a satellite call function, even if there is cellular network coverage, the other card cannot initiate or receive a call. That is caused by radio frequency interference at the hardware level, and more importantly, the software-level design Therefore, how to "embed" satellite calling into a terminal to achieve dual standby and dual communication for satellite calling and conventional calling is a technical problem to be solved in related art.

In an embodiment, a conventional call includes, but not limited to, a cellular network call, etc.

Embodiments of the present application provide a satellite call method, in which a satellite telecommunication service layer, a satellite call audio processing layer and the like are introduced into a terminal integrated with a satellite communication chip, so that a conventional call is compatible with a satellite call, thereby achieving the a dual-standby dual-communication effect, and better integration of a satellite call into a conventional terminal system.

The following embodiments take the Android system as an example.

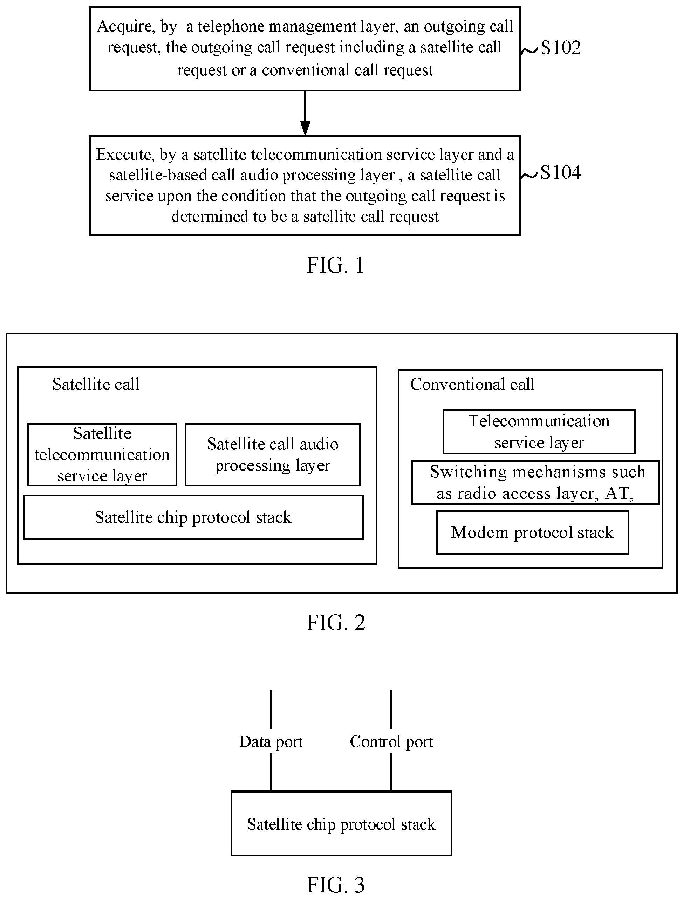

FIG. 1 shows a schematic flow chart of a satellite call method provided in embodiments of the present application, and the method may be performed by a terminal (e.g., an Android terminal), in other words, the method may be executed by software or hardware installed on the terminal. As shown in FIG. 1, the method may include the following steps.

At S102: a telephone management layer acquires an outgoing call request, where the outgoing call request includes a satellite call request or a conventional call request.

In one embodiment, prior to S102, the method may further include that: in response to that a satellite call is selected via a human-machine interaction interface, the outgoing call request is generated. In this embodiment, information related to the satellite call service may be displayed on the human-machine interaction interface (e.g., a call interface) of the terminal. According to this embodiment, special design of the call interface of the terminal is not needed, the satellite call may use a call interface similar to that of a conventional call, thereby simplifying the implementation.

At S104: when it is determined that the outgoing call request is a satellite call request, a satellite telecommunication service layer and a satellite call audio processing layer execute a satellite call service.

The satellite call audio processing layer is used for processing audio data from a satellite chip protocol stack and providing audio data to the satellite chip protocol stack, and the audio data is audio data corresponding to the satellite call service.

In one embodiment, the satellite telecommunication service layer provides a satellite call account, etc., for executing the satellite call service.

In one embodiment, the satellite call audio processing layer is used for processing downlink audio data from the satellite chip protocol stack and providing uplink audio data to the satellite chip protocol stack.

In the satellite call method provided by the embodiments of the present application, the main software architecture at the implementation level may refer to FIG. 2. In this embodiment, a satellite telecommunication service layer and a satellite call audio processing layer are introduced to achieve control over satellite calls; where the call interface and telephone management logic may either share those of conventional calls or be set separately. Sharing can simplify the implementation, reduce the complexity of user operations, and improve user experience.

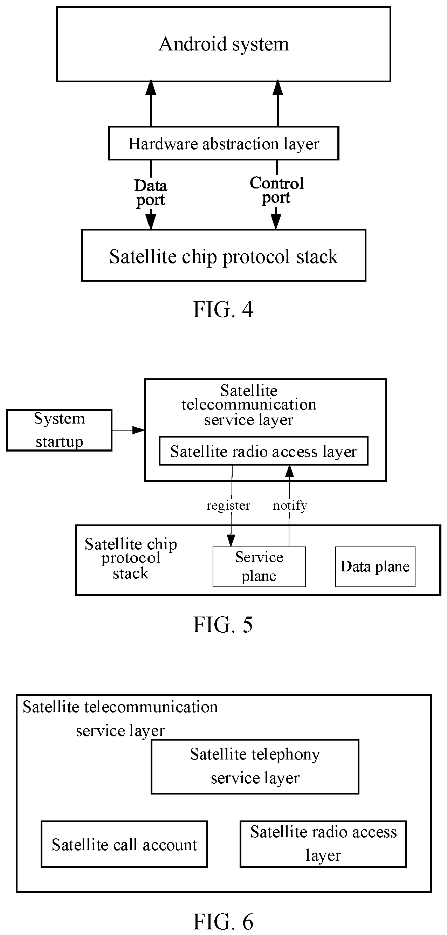

As shown in FIG. 3, the satellite chip protocol stack interacts with the Android system of the terminal via a data port and a control port. In some cases, as shown in FIG. 4, the satellite chip protocol stack may be adapted by a Hardware Abstraction Layer (HAL) and then accessed to the Android system of the terminal.

According to the satellite call method provided by the embodiments of the present application, the satellite telecommunication service layer and the satellite call audio processing layer are introduced into the terminal, thereby achieving better integration of satellite calling into a conventional terminal system, and a dual-standby dual-communication effect for satellite calling and conventional calling.

The satellite call method provided by the embodiments of the present application can achieve loose coupling between the satellite call service and the native system, reduce destructive modifications to the native system, and thereby quickly adapt to various types of satellite chip solutions; and thus, support dual standby and dual communication for satellite calling and conventional calling in the software architecture.

It is foreseeable that, combined with the currently extremely high market coverage of smart mobile terminals, the miniaturized integration of satellite communication into smart mobile terminals will greatly empower smart terminals, enabling them to play a more important role in scenarios such as disaster relief, outdoor activities, and remote area coverage.

In one embodiment, , executing, by the satellite telecommunication service layer and the satellite call audio processing layer, the satellite call service in S104 may include the following steps that: the satellite telecommunication service layer notifies the outgoing call request to the satellite chip protocol stack via a satellite radio access layer; and the satellite call audio processing layer receives audio data from the satellite chip protocol stack and transmits audio data to the satellite chip protocol stack.

In one embodiment, the satellite call audio processing layer receives downlink audio data from the satellite chip protocol stack, which may be audio data from the other side of the call; and transmits uplink audio data to the satellite chip protocol stack, which may be audio data collected by the terminal itself.

In some examples, the satellite call audio processing layer may receive audio data from the satellite chip protocol stack via the satellite radio access layer, and transmit audio data to the satellite chip protocol stack. Whether the satellite radio access layer is needed between the satellite call audio processing layer and the satellite chip protocol stack may be determined according to the specific implementation of the satellite chip protocol stack.

During the execution of the satellite call service by the terminal, a satellite call capability may be provided by an independent satellite chip protocol stack integrated into the system. According to the general design concept in the chip level, a data port and a control port are generally used to provide flow control and interaction of a service, as shown in FIG. 3 or FIG. 4. Therefore, the above outgoing call request may be transmitted via the control port; the above audio data may be transmitted via the data port.

The above embodiments mainly describe the outgoing call procedure for satellite call, and the following describes the incoming call procedure for satellite call. It can be understood that the incoming call procedure can be a supplement to the outgoing call procedure, or can be implemented independently from the outgoing call procedure. In one embodiment, the satellite call method may further include the following steps: 1) when an incoming call request is acquired, the satellite chip protocol stack notifies the satellite telecommunication service layer of the incoming call request via a satellite radio access layer; and 2) the satellite telecommunication service layer notifies the telephone management layer of the incoming call request; and 3) the satellite telecommunication service layer and the satellite call audio processing layer execute the satellite call service. The specific execution process of the satellite call service may refer to S104.

In one embodiment, the satellite call method may further include the following steps: when the terminal initiates a satellite access phase, the satellite telecommunication service layer sends a registration request to the satellite chip protocol stack; where the registration request is used to request to acquire a notification event from the satellite chip protocol stack, and the notification event includes at least one of: a notification event of whether satellite access succeeds, or a paging event. Regarding the paging event, for example, when a core network needs to establish a connection with a terminal, the core network initiates a paging procedure. In this situation, the core network sends a paging message to a base station, and the base station may send a paging message to the terminal in the paging process.

As shown in FIG. 5, in some cases, during the startup registration phase of the Android terminal, the satellite telecommunication service layer initiates an event registration request to the satellite chip protocol stack via the satellite radio access layer, so as to acquire the notification event whether satellite access succeeds, the paging event, etc. In a subsequent process, the satellite chip protocol stack may send a notification to the satellite telecommunication service layer, for example, to notify that satellite access succeeds or notify that satellite access failed, send a paging message, send an incoming call request, etc.

This embodiment may further include the following steps: when the terminal initiates the satellite access phase, the satellite telecommunication service layer starts at least one of the following for the satellite call service: a satellite call account, a satellite radio access layer, or a satellite telephony service layer.

As shown in FIG. 6, when the terminal initiates the satellite access phase, the satellite telecommunication service layer starts a satellite call account, a satellite radio access layer, and a satellite telephony service layer to support the satellite call service, wherein the satellite call account is bound to the satellite telephony service layer, so that the satellite telephony service layer can determine to use the satellite call service based on the satellite call account.

The satellite telephony service layer is used for at least one of: determining whether the outgoing call request is a satellite call request or a conventional call request; or controlling a call state of the satellite call, wherein the call state includes mute or hold for example.

The satellite access phase mentioned in the above various embodiments may include searching for a satellite and registering with a satellite, and in response to a result of searching for a satellite and registering with a satellite the satellite call account is used for at least one of the following.
1)In response to that the satellite call account is selected, a satellite call capability of the terminal is acquired, and whether the terminal supports use of the satellite call service is determined.
2) If the terminal supports use of the satellite call service, a call initiated using the satellite call account is guided to execute the satellite call service.

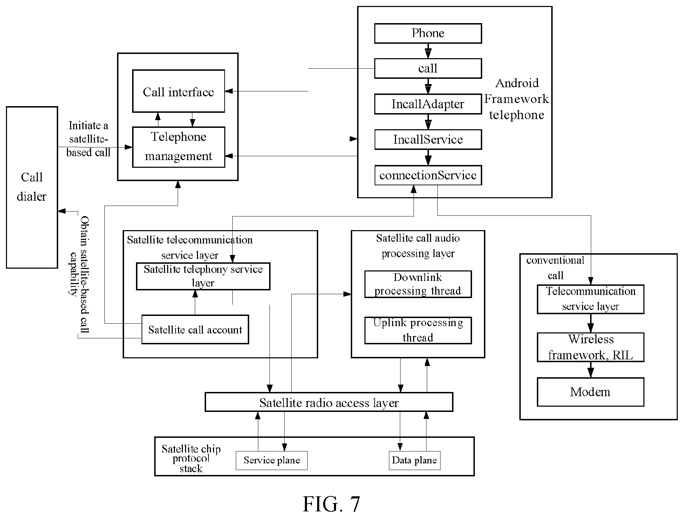

The software architecture of a satellite call method according to another embodiment of the present application is shown in FIG. 7 includes the following.

A satellite telecommunication service layer: may be used to provide a satellite call account, the satellite call account runs in parallel with a conventional call account of Android. Thus, a call behavior control mechanism similar to a conventional call account is provided, so that a user can perform different types of calls by using different accounts.

This satellite call account is controlled by the result of searching for a satellite and registering with a satellite, and uplink and downlink behavior control is provided synchronously. Regarding uplink, a satellite call account entry is selected by the user, the call dialer obtains the satellite call capability of the terminal via this satellite call account, thereby determining whether the dialer application can use the satellite call service. Regarding downlink, the satellite telephony service layer is pointed to, and the call initiated using this satellite call account is guided to use the procedure of the satellite call service.

A satellite telephony service layer: inherits from the basic class of the Android telephone framework, and can coexist in the system in the form of satellite calling. The core function class of this satellite telephony service layer inherits from the basic class of the Android native telecommunication framework such as android.telecom.Connection and android.telecom.ConnectionService, and interfaces with the satellite radio access layer (Satellite RIL) of this layer, so that satellite calling and conventional calling coexist at two levels.

A satellite call audio processing layer: driven by the satellite telecommunication service layer, processes downlink voice data from the satellite chip protocol stack, and synchronously provides uplink audio data to the satellite chip protocol stack side. To achieve a duplex effect, the satellite call audio processing layer designs two concurrent threads to process uplink and downlink audio data on the satellite link, after the satellite call service is actually connected, the two threads are triggered to work synchronously, the starting, running, or termination of these two threads is controlled by user operations such as mute, hold, etc.

A satellite radio access layer: interacts with the satellite chip protocol stack for related events downward, and transforms and encapsulates them upward into related interfaces for the satellite telecommunication service layer and the satellite call audio processing layer to call. In some embodiments, the satellite radio access layer may belong to the satellite telecommunication service layer; and in some embodiments, the satellite radio access layer may be independent of the satellite telecommunication service layer.

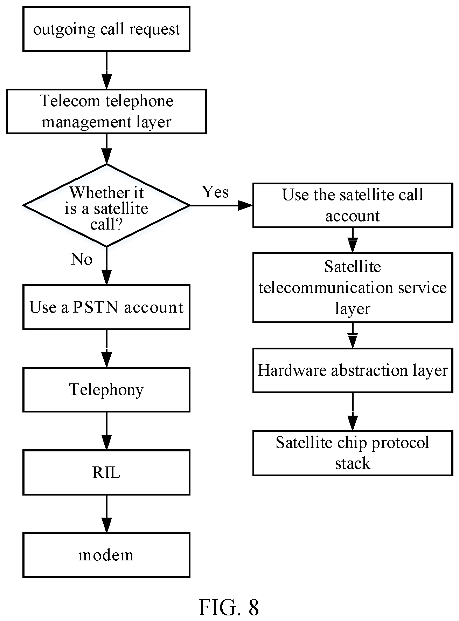

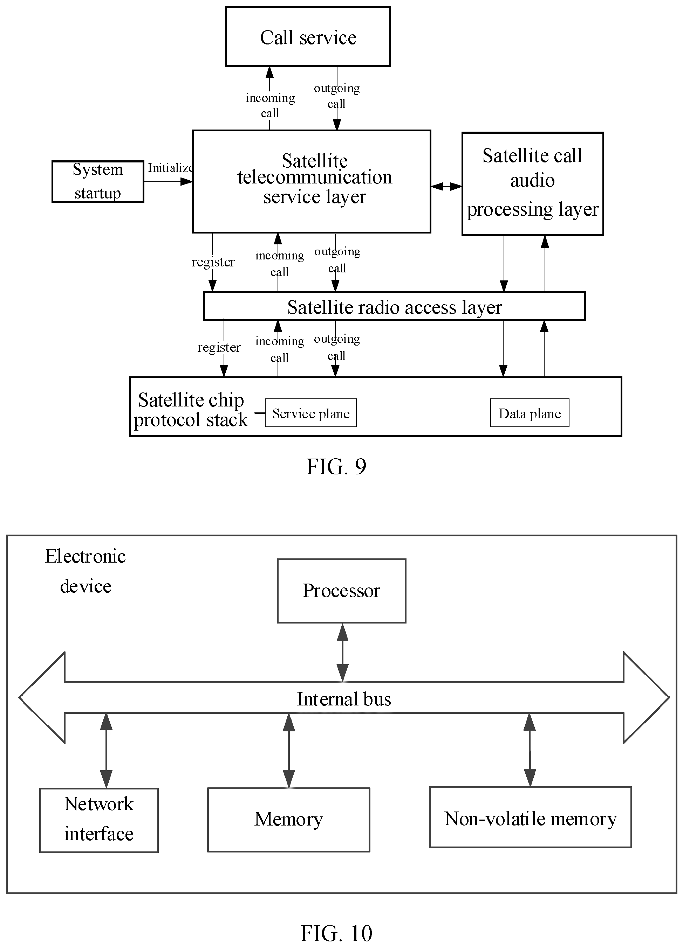

Based on the above software architecture design, in an outgoing call scenario, the call initiation process is shown in FIG. 8. The main interaction of the entire satellite call service is shown in FIG. 9.

As shown in FIG. 8, in an outgoing call initiation scenario, after the Telecom telephone management layer acquires an outgoing call request, whether the outgoing call request is a satellite call request is determined. If it is not a satellite call request (i.e., it is a conventional call request), then the conventional call procedure can be followed subsequently, a PSTN account, Telephony, RIL, and modem are used to execute the conventional call; or if it is a satellite call request, then the satellite call account can be used, and the satellite telecommunication service layer, hardware abstraction layer, satellite chip protocol stack, etc., are used to execute the satellite call service.

As shown in FIG. 9, the main interaction process of the entire satellite call service is as follows: in the system startup phase of the Android terminal, the satellite telecommunication service layer initiates an event registration request to the satellite chip protocol stack via the satellite radio access layer, so as to acquire a notification event such as whether satellite access succeeds, a paging event, etc.

In an outgoing call scenario of the satellite call service, the satellite telecommunication service layer notifies the outgoing call request to the service plane of the satellite chip protocol stack via the satellite radio access layer, at the same time, the satellite call audio processing layer receives audio data from the data plane of the satellite chip protocol stack and transmits audio data to the data plane of the satellite chip protocol stack.

In an incoming call scenario of the satellite call service, the satellite chip protocol stack notifies the satellite telecommunication service layer of the incoming call request via the satellite radio access layer, at the same time, the satellite call audio processing layer receives audio data from the data plane of the satellite chip protocol stack and transmits audio data to the data plane of the satellite chip protocol stack.

Corresponding to the satellite call method provided by the embodiments of the present application, embodiments of the present application also provide a terminal, including the following modules.

A telephone management layer is configured to acquire an outgoing call request which includes a satellite call request or a conventional call request, and to determine whether the outgoing call request is a satellite call request.

A satellite telecommunication service layer and a satellite call audio processing layer are configured to execute a satellite call service when it is determined that the outgoing call request is a satellite call request; where the satellite call audio processing layer is used for processing audio data from a satellite chip protocol stack and providing audio data to the satellite chip protocol stack, and the audio data is audio data corresponding to the satellite call service.

The terminal provided by the embodiments of the present application, by introducing the satellite telecommunication service layer and the satellite call audio processing layer, can achieve concurrency and coexistence of the satellite call service and conventional call service, enable better integration of satellite calling into conventional terminal systems, and achieve a dual-standby dual-communication effect for satellite calling and conventional calling.

In one embodiment, the terminal further includes a satellite radio access layer; wherein the satellite radio access layer is connected to the satellite call audio processing layer and the satellite chip protocol stack. The satellite telecommunication service layer may be used to notify the outgoing call request to the satellite chip protocol stack via a satellite radio access layer; and the satellite call audio processing layer may be used to receive audio data from the satellite chip protocol stack and transmit audio data to the satellite chip protocol stack.

As one embodiment, the satellite telecommunication service layer is further used to, notify the satellite chip protocol stack of the incoming call request via a satellite radio access layer when an incoming call request is acquired,; the satellite telecommunication service layer is further used to notify the telephone management layer of the incoming call request; and the terminal may execute the satellite call service by the satellite telecommunication service layer and the satellite call audio processing layer.

As one embodiment, when the terminal initiates a satellite access phase, the satellite telecommunication service layer is further used to send a registration request to the satellite chip protocol stack; where the registration request is used to request to acquire a notification event from the satellite chip protocol stack, and the notification event comprises at least one of: a notification event of whether satellite access succeeds, or a paging event.

As one embodiment, when the terminal initiates the satellite access phase, the satellite telecommunication service layer is further used to create at least one of the following for the satellite call service: a satellite call account, a satellite radio access layer, or a satellite telephony service layer.

As one embodiment, the satellite telephony service layer is used for at least one of: determining whether the outgoing call request is a satellite call request or a conventional call request; or controlling a call state of the satellite call.

As one embodiment, the satellite access phase includes searching for a satellite and registering with a satellite, and the satellite call account is used, and in response to a result of searching for a satellite and registering with a satellite, for at least one of: 1) in response to that the satellite call account is selected, acquiring a satellite call capability of the terminal, and determining whether the terminal supports the satellite call service; 2) if the terminal supports use of the satellite call service, a call initiated using the satellite call account is guided to execute the satellite call service.

As one embodiment, the terminal is further configured to: generate the outgoing call request in response to that a satellite call is selected via a human-machine interaction interface.

The terminal provided in the embodiments of the present application can execute any of the embodiments described in the foregoing method embodiments, and achieve the functions and beneficial effects of any of the embodiments described in the foregoing method embodiments, which will not be repeated here.

FIG. 10 shows a schematic structural diagram of the hardware of an electronic device that implements the embodiments of the present application, referring to the figure, at the hardware level, the electronic device includes a processor, and optionally, an internal bus, a network interface, and a memory. The memory may include an internal memory, for example a high-speed random access memory (RAM), and may also include a non-volatile memory (non-volatile memory), such as at least one disk storage, etc. Of course, the electronic device may also include hardware required for other services.

The processor, network interface and memory may be interconnected by an internal bus, which may be an Industry Standard Architecture (ISA) bus, a Peripheral Component Interconnect (PCI) bus or an Extended Industry Standard Architecture (EISA) bus, etc. The bus may be divided into an address bus, a data bus, a control bus, etc. For ease of representation, only one bidirectional arrow is used in the figure, but it does not mean that there is only one bus or one type of bus.

The memory is used to store the program. Specifically, the program may include program codes, and the program codes include computer operation instructions. The memory may include an internal memory and a non-volatile memory, and provides instructions and data to the processor.

The processor reads corresponding computer program from the non-volatile memory into the memory and then runs it, forming a terminal for locating the target user at the logical level. The processor executes programs store in the memory, and specifically are used to perform the method disclosed in the embodiment shown in FIGS. 1-9 and implement the functions and beneficial effects of the various methods described in the foregoing method embodiments, which will not be repeated here.

The method disclosed in embodiments shown in FIGS. 1-9 of the present application may be applied to a processor or implemented by a processor. The processor may be an integrated circuit chip with signal processing capabilities. In the implementation process, each step of the above method may be completed by an integrated logic circuit in the form of hardware in the processor or an instruction in the form of software. The above processor may be a general-purpose processor, including a central processing unit (CPU), a network processor (NP), etc.; it may also be a digital signal processor (DSP), an application-specific integrated circuit (ASIC), a field-programmable gate array (FPGA) or other programmable logic devices, discrete gates or transistor logic devices, discrete hardware components. The methods, steps and logic block diagrams disclosed in the embodiments of the present application may be implemented or executed. A general-purpose processor may be a microprocessor or the processor may also be any conventional processor, etc. The steps of the method disclosed in the embodiments of the present application may be directly embodied as a hardware decoding processor for execution, or may be implemented by a combination of hardware and software modules in the decoding processor. The software module may be located in a storage medium well-known in the art, such as a random access memory, a flash memory, a read-only memory, a programmable read-only memory, or an electrically erasable programmable memory, a register, etc. The storage medium is located in the memory, and the processor reads information in the memory and completes the steps of the above method in combination with its hardware.

In one embodiment, the electronic device includes at least one processor; and a memory storing computer-executable instructions, wherein the executable instructions, when executed, cause the at least one processor to execute any of the embodiments described in the foregoing method embodiments, and achieve the functions and beneficial effects of any of the embodiments described in the foregoing method embodiments, which will not be repeated here.

In addition to software implementation methods, the electronic device of the present application does not exclude other implementation methods, such as logic devices or a combination of software and hardware, etc., that is, the execution subject of the following processing flow is not limited to each logic unit, but may also be hardware or logic devices.

The embodiment of the present application also proposes a computer-readable storage medium, wherein the computer-readable medium stores at least one computer program, and the computer program, when executed by a processor, implements the satellite call method of the embodiments shown in FIGS. 1-9, and achieves the functions and beneficial effects of the methods described in the foregoing embodiments, which will not be repeated here.

The aforementioned computer-readable storage medium may include, but is not limited to, magnetic storage devices (e.g., hard disks, floppy disks, or magnetic tapes, etc.), optical disks (e.g., Compact Disk (CD), Digital Versatile Disk (DVD), etc.), smart cards, and flash memory devices (e.g., Erasable Programmable Read-Only Memory (EPROM), cards, sticks, or key drives, etc.).

Embodiments of the present application further provides a computer program product, the computer program product includes a computer program stored on a non-transitory computer-readable storage medium, the computer program includes program instructions, the program instructions, when executed by a computer, implements the method disclosed in embodiments shown in FIGS. 1-9 and implements functions and beneficial effects of the methods described in the foregoing method embodiments, which will not be repeated.

In summary, the above descriptions are merely preferred embodiments of the present application and are not intended to limit the protection scope of the present application. Any modification, equivalent replacement, improvement, etc., that is made within the spirit and principle of the present application should be included within the protection scope of the present application.

The system, device, module or unit described in the above embodiments may be specifically implemented by a computer chip or entity, or a product with certain functions. A typical implementation device is a computer. Specifically, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

Computer readable media include permanent and non-permanent, removable and non-removable media that may be used to store information by any method or technology. Information may be computer-readable instructions, data structures, program modules or other data. Examples of computer storage media include, but are not limited to, Phase Change Memory (PCM), Static Random-Access Memory (SRAM), Dynamic Random Access Memory (DRAM), other types of random access memory (RAM), Read-Only Memory (ROM), Electrically Erasable Programmable Read Only Memory (EEPROM), Flash memory or other memory technology, Compact Disc Read-Only Memory (CD-ROM), Digital Video Disc (DVD) or other optical storage, magnetic cassettes, magnetic tape magnetic disk storage or other magnetic storage devices or any other non-transmission media that may be used to store information that is accessible to a computing device. According to the definition in this document, computer-readable media do not include temporary computer-readable media (transitory media), such as modulated data signals and carrier waves.

It should be noted that, the terms "include", "comprise" or any other variations thereof are intended to cover a non-exclusive inclusion, such that a process, method, article, or device that comprises a series of elements not only comprises those elements, but also comprises other elements that are not explicitly listed, or further comprises elements that are inherent to the process, method, article, or device. Without further limitations, an element limited by "comprising a..." does not exclude the presence of other identical elements in the process, method, article, or device that includes the element.

Each embodiment in this description is described in a progressive manner, and the same or similar parts between the embodiments may be referred to each other, and each embodiment focuses on the differences from other embodiments. In particular, for the system embodiment, since it is basically similar to the method embodiment, the description is relatively simple, and the relevant parts may be referred to the partial description of the method embodiment.

## Claims

1. A satellite call method, performed by a terminal, comprising:
acquiring, by a telephone management layer, an outgoing call request, the outgoing call request comprising a satellite call request or a conventional call request; and
executing, by a satellite telecommunication service layer and a satellite call audio processing layer, a satellite call service upon the condition that the outgoing call request is determined to be a satellite call request,
wherein the satellite call audio processing layer is used for processing audio data from a satellite chip protocol stack and providing audio data to the satellite chip protocol stack, and the audio data corresponds to the satellite call service.

2. The method according to claim 1, wherein executing, by the satellite telecommunication service layer and the satellite call audio processing layer, the satellite call service comprises:
notifying, by the satellite telecommunication service layer via a satellite radio access layer, the outgoing call request to the satellite chip protocol stack; and
receiving, by the satellite call audio processing layer, the audio data from the satellite chip protocol stack and transmitting the audio data to the satellite chip protocol stack.

3. The method according to claim 1, wherein the method further comprises:
notifying, by the satellite chip protocol stack via a satellite radio access layer, the satellite telecommunication service layer of an incoming call request upon the condition the incoming call request is acquired;
notifying, by the satellite telecommunication service layer, the telephone management layer of the incoming call request; and
executing, by the satellite telecommunication service layer and the satellite call audio processing layer, the satellite call service.

4. The method according to any one of claims 1 to 3, wherein the method further comprises:
sending, by the satellite telecommunication service layer, a registration request to the satellite chip protocol stack upon the condition that the terminal initiates a satellite access phase;
wherein the registration request is used to request to acquire a notification event from the satellite chip protocol stack, and the notification event comprises at least one of: a notification event of whether satellite access succeeds, or a paging event.

5. The method according to claim 4, wherein the method further comprises:
starting, by the satellite telecommunication service layer, at least one of the following for the satellite call service upon the condition that the terminal initiates the satellite access phase: a satellite call account, a satellite radio access layer, or a satellite telephony service layer.

6. The method according to claim 5, wherein the satellite telephony service layer is used for at least one of: determining whether the outgoing call request is a satellite call request or a conventional call request; or controlling a call state of a satellite call.

7. The method according to claim 5, wherein the satellite access phase comprises searching for a satellite and registering with a satellite, and in response to a result of searching for a satellite and registering with a satellite, the satellite call account is used for at least one of following:
in response to that the satellite call account is selected, acquiring a satellite call capability of the terminal, and determining whether the terminal supports the satellite call service; or
in response to that the terminal supports use of the satellite call service, guiding a call initiated using the satellite call account to execute the satellite call service.

8. The method according to claim 1, wherein prior to acquiring the outgoing call request by the telephone management layer, the method further comprises:
generating the outgoing call request in response to that a satellite call is selected via a human-machine interaction interface.

9. A terminal, comprising:
a telephone management layer, configured to acquire an outgoing call request which comprises a satellite call request or a conventional call request, and to determine whether the outgoing call request is a satellite call request; and
a satellite telecommunication service layer and a satellite call audio processing layer, configured to execute a satellite call service upon the condition that the outgoing call request is determined to be a satellite call request;
wherein the satellite call audio processing layer is used for processing audio data from a satellite chip protocol stack and providing audio data to the satellite chip protocol stack, and the audio data is audio data corresponding to the satellite call service.

10. The terminal according to claim 9, further comprising a satellite radio access layer;
wherein the satellite radio access layer is connected to the satellite call audio processing layer and the satellite chip protocol stack.

11. An electronic device, comprising:
at least one processor; and
a memory storing computer-executable instructions, wherein the computer-executable instructions, when executed, enable the processor to execute the satellite call method according to any one of claims 1-8.

12. A computer-readable medium, wherein the computer-readable medium stores at least one computer program, the computer program, when executed by a processor, implements the satellite call method according to any one of claims 1-8.
